# DEMANDE DE BREVET EUROPEEN

(11) **EP 4 209 371 A1**
(43) Date de publication de la demande: **12.07.2023**
(21) Numéro de dépôt: 22215691.1
(22) Date de dépôt: 21.12.2022
(51) Int. Cl.: B60K 1/02, B60K 1/00, B60K 11/02, B60K 17/02, B60K 17/22, F16H 61/04, F16H 3/089, F16H 37/06, F16H 3/08

(54) **SYSTEME DE PROPULSION POUR VEHICULE ELECTRIQUE**

(30) Priorité: 08.01.2022 FR 2200124
(71) Demandeur: VALEO EMBRAYAGES, 80009 Amiens (FR)
(72) Inventeur: LEMAIRE, Thibault, 95892 CERGY PONTOISE (FR); VASSIEUX, Loic, 95892 CERGY PONTOISE (FR); LHEUREUX, Dominique, 95892 CERGY PONTOISE (FR); AUFFRAY, Benoist, 95892 CERGY PONTOISE (FR); DERVILLE HELLUIN, Clément, 95892 CERGY PONTOISE (FR)
(74) Mandataire: Valeo Powertrain Systems

(57) **Abrégé**

Système de propulsion (1) pour véhicule électrique, comprenant :
- un premier sous-ensemble (EM1) de machines électriques lié cinématiquement à une première roue dentée commune (11) ;
- un deuxième sous-ensemble (EM2) de machines électriques lié cinématiquement à une deuxième roue dentée commune (11') ;
- un premier ensemble de trains d'engrenage (T1) liant cinématiquement le premier sous-ensemble (EM1) à un arbre secondaire (13) apte à entraîner les roues motrices du véhicule, dans lequel un premier système de couplage sélectif (10) est agencé pour sélectionner un premier train d'engrenage ou un deuxième train d'engrenage depuis une position neutre lors d'une phase de changement de rapport de vitesse ;
- un deuxième sous-ensemble (EM2) liant cinématiquement la deuxième roue dentée commune (11') à l'arbre secondaire (13),

dans lequel le deuxième sous-ensemble (EM2) de machines électriques est commandé de manière à fournir un couple supplémentaire compensant la perte de couple issue du découplage du premier sous-ensemble (EM1) inhérente au changement de rapport de vitesse.

## Description

### DOMAINE TECHNIQUE DE L'INVENTION

L'invention se rapporte à un système de propulsion pour véhicule électrique. Ce système de propulsion comprend notamment plusieurs machines électriques fournissant un couple moteur, une succession de trains d'engrenage et des systèmes de couplage sélectif distincts capables de fournir plusieurs rapports de réduction de vitesses et plusieurs modes de fonctionnement distincts à l'utilisateur du véhicule.

Un tel véhicule est à propulsion purement électrique, étant dépourvu de moteur thermique de propulsion. Le véhicule électrique peut être un véhicule automobile ou un véhicule industriel, tel qu'un poids lourd, un autobus ou un tracteur.

### ÉTAT DE LA TECHNIQUE ANTÉRIEURE

On connaît par exemple un tel système de propulsion de la demande de brevet WO17080571 A1. Le système de propulsion selon cette demande de brevet comporte une première machine électrique et une deuxième machine électrique, une transmission agencée pour transmettre un couple desdites machines électriques à une paire de roues entraînées d'un véhicule. La première machine électrique est reliée en entraînement à un premier arbre d'entrée de la transmission et la deuxième machine électrique est reliée en entraînement à un second arbre d'entrée de la transmission. Ce système de propulsion se distingue par un premier trajet de couple, qui permet de transmettre un couple, comprenant un seul rapport de transmission entre le premier arbre d'entrée et un arbre de sortie de la transmission, et par un second trajet de couple, qui permet de transmettre un couple, comprenant deux rapports de transmission sélectionnables et pouvant venir séparément en prise entre le second arbre d'entrée et ledit arbre de sortie de la transmission, les trois rapports de transmission des premier et second trajets de couple étant différents les uns des autres.

Un tel système de propulsion est contraignant du fait que les machines électriques ne puissent pas fonctionner selon un même régime de fonctionnement car étant située sur deux trajet de couple distincts, ce qui rend complexe le pilotage des machines électriques.

Une autre contrainte vient du fait que la puissance globale développée par le système de propulsion est limitée par l'emploi de seulement deux machines électriques.

Il existe un besoin pour améliorer encore les systèmes de propulsion pour véhicule électrique comprenant plusieurs moteurs électriques et à plusieurs rapports de réduction de vitesses.

### EXPOSÉ DE L'INVENTION

L'invention vise à répondre à ce besoin et elle y parvient, selon l'un de ses aspects, à l'aide d'un système de propulsion pour véhicule électrique, comprenant :
- un premier sous-ensemble de n1 machines électriques de propulsion apte à fournir un premier couple moteur, n1 étant un nombre entier supérieur ou égal à 2, chaque machine électrique comprenant un stator et un rotor présentant un arbre de sortie mobile en rotation autour d'un axe lié cinématiquement à une première roue dentée commune de sorte à former un premier réducteur de vitesse,
- un deuxième sous-ensemble de n2 machines électriques de propulsion apte à fournir un deuxième couple moteur, n2 étant un nombre entier supérieur ou égal à 2, chaque machine électrique comprenant un stator et un rotor présentant un arbre de sortie mobile en rotation autour d'un axe lié cinématiquement à une deuxième roue dentée commune de sorte à former un deuxième réducteur de vitesse,
- un premier ensemble de trains d'engrenage liant cinématiquement la première roue dentée commune à un arbre secondaire apte à entraîner un ensemble d'une ou plusieurs roues motrices du véhicule, dans lequel un premier système de couplage sélectif, disposé entre la première roue dentée commune et l'arbre secondaire, est agencé pour sélectionner un premier train d'engrenage ou un deuxième train d'engrenage depuis une position neutre lors d'une phase de changement de rapport de vitesse,
- un deuxième ensemble de trains d'engrenage liant cinématiquement la deuxième roue dentée commune à l'arbre secondaire,
dans lequel le deuxième sous-ensemble de n2 machines électriques est commandé de manière à fournir un couple supplémentaire permettant de compenser totalement la perte de couple issue du découplage du premier sous-ensemble de n1 machines électriques inhérente au changement de rapport de vitesse.

Par la fourniture d'un système de propulsion qui comprend deux sous-ensemble de machines électriques distincts, il est possible de faire démarrer le véhicule électrique en alimentant électriquement les deux sous-ensembles de machines électriques en continu. Un couple maximal peut être transmis aux roues du véhicule. Lors d'une phase de changement de rapport de vitesse, l'avantage apporté par l'invention est que l'un des sous-ensembles de machines électriques peut être commandé de manière à fournir un couple ou une puissance supplémentaire lors de cette phase tandis que l'autre sous-ensemble de machines électriques ne transmet plus de couple ou de puissance afin d'effectuer ce changement de rapport. Comme la perte de couple ou de puissance inhérente au changement de vitesse est compensée totalement, le véhicule électrique conserve sa vitesse lors de cette phase transitoire.

Avantageusement, le couple supplémentaire peut être approximativement égal au premier couple moteur qui est fournie par le premier sous-ensemble de n1 machines électriques juste avant la phase de changement de rapport de vitesse.

Chaque machine électrique dispose ce qu'on appelle d'une « puissance nominale », qui est la puissance qu'elle est capable de fournir sur une longue période de temps et une « puissance maximale » (alias « puissance de crête »), qui est la puissance que l'on ne peut dépasser. De manière avantageuse, la puissance maximale n'est utilisée que sur une très courte durée, de l'ordre de quelques secondes, afin d'éviter une surchauffe excessive et d'endommager les composants de la machine électrique. Selon l'invention, la puissance nominale est dépassée lors des changements de rapport de vitesse pour compenser la perte de puissance inhérente à ce changement. Autrement dit, en condition normale de roulage du véhicule, les puissances respectives délivrées par les n1 machines électriques et les n2 machines électriques restent inférieures ou égales à la puissance nominale correspondante.

Au sens de la présente demande :
- un système de couplage entre deux pièces est sélectif lorsqu'il permet de coupler ou de découpler les deux pièces selon la consigne reçue,
- un système de couplage entre deux pièces qui n'est pas sélectif couple en permanence ces deux pièces,
- deux pièces couplées par l'un des systèmes de couplage précités sont solidaires en rotation. Cette solidarisation peut correspondre à un verrouillage de couple dans le cas où le système de couplage met en oeuvre un crabot et cette solidarisation peut mettre en oeuvre une transmission par frottement dans le cas où le système de couplage met en oeuvre un embrayage, et
- « en amont » et « aval » se définissent par rapport au sens de transfert du couple, depuis une machine électrique vers les roues du véhicule.

De préférence, les n1 machines électriques sont similaires, par exemple des machines électriques synchrones à aimants ou à rotor bobiné. En variante, il peut s'agir de machines asynchrones, par exemple. L'utilisation de plusieurs machines électriques similaires permet de réduire les coûts de production et de faciliter le pilotage des machines électriques.

Avantageusement, les n1 machines électriques du premier sous-ensemble peuvent fournir une même puissance nominale mécanique, cette puissance étant par exemple comprise entre 50kW et 150kW.

De préférence, les n2 machines électriques sont similaires, par exemple des machines électriques synchrones à aimants ou à rotor bobiné. En variante, il peut s'agir de machines asynchrones, par exemple. L'utilisation de plusieurs machines électriques similaires permet de réduire les coûts de production et de faciliter le pilotage des machines électriques.

Avantageusement, les n2 machines électriques du deuxième sous-ensemble peuvent fournir une même puissance nominale mécanique, cette puissance étant par exemple comprise entre 50kW et 150kW.

Les n1 machines électriques du premier sous-ensemble et les n2 machines électriques du deuxième sous-ensemble peuvent être similaires. L'emploi de machines électriques similaires ou identiques peut permettre de réduire les coûts de production du système de propulsion, en réduisant le besoin en développements spécifiques d'une machine à l'autre et en augmentant les volumes.

Selon une variante de l'invention, les n1 machines électriques du premier sous-ensemble et les n2 machines électriques du deuxième sous-ensemble peuvent être différentes.

Chaque machine électrique peut être configurée pour fonctionner de manière réversible, étant alors associée à une électronique tel qu'un onduleur /redresseur lui permettant alternativement : d'être alimentée en énergie électrique pour fournir un couple moteur, et de générer de l'énergie électrique sur la base d'un couple reçu sur son arbre lorsque le véhicule freine ou qu'il roule sur sa lancée, par exemple.

Chaque machine électrique est par exemple une machine électrique tournante.

Le système de propulsion peut comprendre un arbre de transmission équipé de cardans, reliant l'arbre secondaire à un différentiel. Ce différentiel peut être un différentiel mécanique ou un différentiel électronique pilotant le couple d'entraînement sur chaque roue motrice du véhicule.

En variante, le différentiel peut être lié cinématiquement directement sur l'arbre secondaire. De cette manière, l'encombrement axial du système de propulsion peut être réduit.

De préférence, le système de propulsion peut comprendre un carter de transmission supportant le premier sous-ensemble de n1 machines électriques et la première roue dentée commune à l'aide d'au moins un premier palier de guidage et supportant également le deuxième sous-ensemble de n2 machines électriques et la deuxième roue dentée commune à l'aide d'au moins un deuxième palier de guidage. Le carter de transmission supporte des contraintes mécaniques réparties plus uniformément du fait de la répartition géométrique des machines électriques autour des roues dentées communes.

Avantageusement, le carter de transmission peut comprendre un circuit de circulation de fluide cheminant entre les n1 machines électriques du premier sous-ensemble et les n2 machines électriques du deuxième sous-ensemble afin d'évacuer les calories émises lors de la transmission du couple supplémentaire. L'utilisation d'un des sous-ensembles de machines électriques au-delà de sa plage d'utilisation nominale de manière à fournir un couple supplémentaire augmente la température au sein du système de propulsion. Un circuit de circulation de fluide permet de maintenir la température constante au sein du système de propulsion.

De préférence, l'axe de rotation de la première roue dentée commune, l'axe de rotation de la deuxième roue dentée commune et l'axe de l'arbre secondaire peuvent être parallèles.

Selon une première variante de l'invention, le premier ensemble de trains d'engrenage peut comprendre :
- des roues dentées primaires aptes à être entraînées par la première roue dentée commune,
- un arbre intermédiaire apte à être entraîné par des roues dentées intermédiaires, chaque roue dentée primaire étant liée cinématiquement à une roue dentée intermédiaire correspondante de sorte à former un train d'engrenage correspondant à un troisième réducteur de vitesse,
- une roue dentée secondaire liée cinématiquement à l'arbre intermédiaire de sorte à former un quatrième réducteur de vitesse,
dans lequel le premier système de couplage sélectif disposé entre l'arbre intermédiaire et les roues dentées intermédiaire est réalisé sous la forme d'un crabot ou d'un synchroniseur.

De préférence, le premier ensemble de trains d'engrenage peut comprendre un deuxième système de couplage sélectif, disposé entre l'arbre intermédiaire et une roue dentée intermédiaire additionnelle, agencé pour sélectionner un troisième train d'engrenage depuis une position neutre lors d'une phase de changement de rapport de vitesse.

Avantageusement, le deuxième système de couplage sélectif peut être réalisé sous la forme d'un crabot ou d'un synchroniseur.

De préférence, le deuxième ensemble de trains d'engrenage peut comprendre une roue dentée primaire entraînée constamment par la deuxième roue dentée commune, ladite roue dentée primaire étant liée cinématiquement à l'arbre intermédiaire de sorte à former un train d'engrenage correspondant à un cinquième réducteur de vitesse.

Avantageusement, l'arbre secondaire peut être entraîné en rotation par la roue dentée secondaire par un troisième système de couplage sélectif réalisé sous la forme d'un crabot ou d'un synchroniseur. De cette manière, il est possible de déconnecter le système de propulsion des roues du véhicule. On sécurise de cette manière le système de propulsion et notamment les machines électriques.

Cette première variante de l'invention présente l'avantage d'avoir trois rapports de réduction distincts sans perte de couple ou de puissance lors des phases de changement de rapport de vitesse.

Selon une deuxième variante de l'invention, le deuxième ensemble de trains d'engrenage peut comprendre un deuxième système de couplage sélectif, disposé entre la deuxième roue dentée commune et l'arbre secondaire, agencé pour sélectionner un troisième train d'engrenage ou un quatrième train d'engrenage depuis une position neutre lors d'une phase de changement de rapport de vitesse, ledit premier sous-ensemble de n1 machines électriques étant commandé de manière à fournir un couple supplémentaire, de manière à compenser totalement la perte de couple issue du découplage du deuxième sous-ensemble de n2 machines électriques inhérente au changement de rapport de vitesse.

Avantageusement, le rapport de réduction du premier train d'engrenage est identique à celui du troisième train d'engrenage et le rapport de réduction du deuxième train d'engrenage est identique à celui du quatrième train d'engrenage.

De préférence, le premier ensemble de trains d'engrenage peut comprendre:
- deux roues dentées primaires aptes à être entraînées par la première roue dentée commune,
- un arbre intermédiaire apte à être entraîné par des roues dentées intermédiaires, chaque roue dentée primaire étant liée cinématiquement à une roue dentée intermédiaire correspondante de sorte à former un train d'engrenage auquel est associé un troisième réducteur de vitesse,
- une roue dentée secondaire liée cinématiquement à l'arbre intermédiaire de sorte à former un quatrième réducteur de vitesse,
dans lequel le premier système de couplage sélectif disposé entre la première roue dentée commune et les roues dentées primaires est réalisé sous la forme d'un crabot ou d'un synchroniseur.

Avantageusement, le deuxième ensemble de trains d'engrenage peut comprendre :
- deux roues dentées primaires aptes à être entraînées par la deuxième roue dentée commune,
- l'arbre intermédiaire commun avec le premier ensemble de trains d'engrenage, chaque roue dentée primaire du deuxième ensemble de trains d'engrenage étant liée cinématiquement à une roue dentée intermédiaire correspondante de sorte à former un train d'engrenage auquel est associé un cinquième réducteur de vitesse,
dans lequel le deuxième système de couplage sélectif disposé entre la deuxième roue dentée commune et les roues dentées primaires est réalisé sous la forme d'un crabot ou d'un synchroniseur.

### BRÈVE DESCRIPTION DES FIGURES

D'autres caractéristiques et avantages de l'invention ressortiront à la lecture de la description qui suit, en référence aux figures annexées.
[Fig. 1] La figure 1 est une vue en élévation d'un système de propulsion pour véhicule électrique selon un premier exemple de mise en oeuvre de l'invention.
[Fig. 2] La figure 2 est une vue isométrique partielle du système de propulsion de la figure 1.
[Fig. 3] La figure 3 est une vue en élévation d'un système de propulsion pour véhicule électrique selon un deuxième exemple de mise en oeuvre de l'invention.
[Fig. 4] La figure 4 est une vue isométrique partielle du système de propulsion de la figure 3.

Pour plus de clarté, les éléments identiques ou similaires sont repérés par des signes de référence identiques sur l'ensemble des figures.

### DESCRIPTION DÉTAILLÉE DE MODES DE RÉALISATION

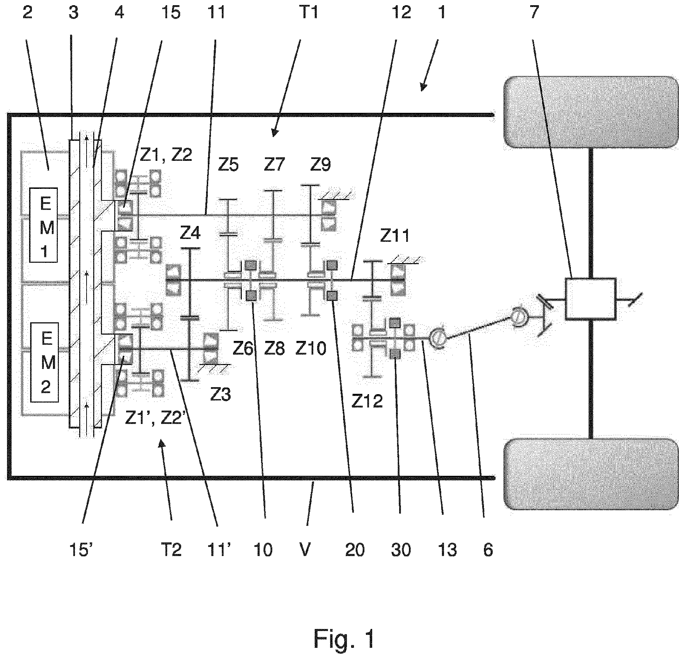

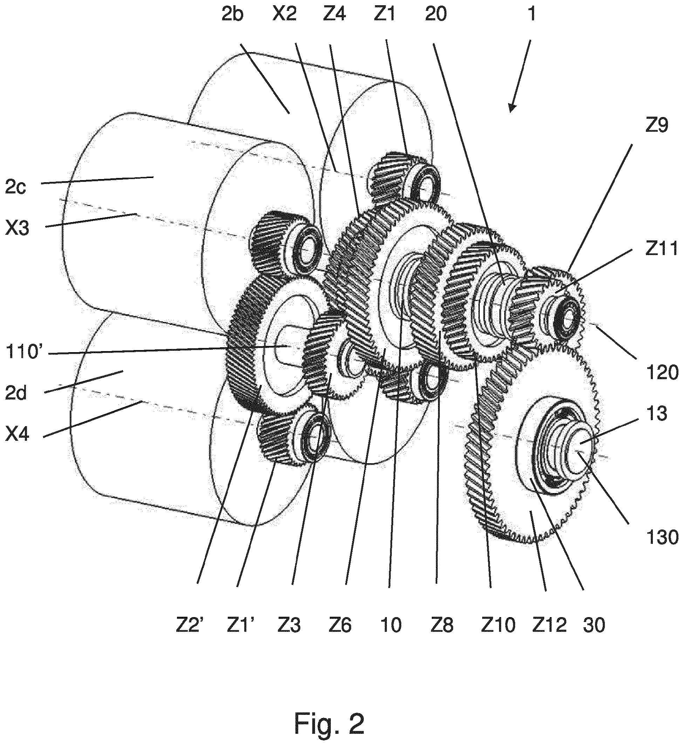

On a représenté sur les figures 1 et 2 un système de propulsion 1 de véhicule électrique V selon un premier exemple de mise en oeuvre de l'invention.

Ce système de propulsion 1 est ici purement électrique, c'est-à-dire qu'il n'utilise aucun moteur thermique pour entraîner le véhicule qui est ici un véhicule industriel. Ce système de propulsion 1 comprend un premier sous-ensemble EM1 de n1 machines électriques de propulsion apte à fournir un premier couple moteur, n1 étant un nombre entier supérieur ou égal à 2. Dans ce premier exemple représenté sur les figures 1 et 2, le premier sous-ensemble comprend deux machines électriques de propulsion 2a, 2b. Comme on peut le voir sur la figure 2, la première machine électrique 2a présente un premier axe de rotation X1 et la deuxième machine électrique 2b présente un deuxième axe de rotation X2.

Chaque machine électrique 2a, 2b du premier sous-ensemble EM1 comprend un stator et un rotor présentant un arbre de sortie mobile en rotation autour d'un axe lié cinématiquement à une première roue dentée commune 11 de sorte à former un premier réducteur de vitesse Z1, Z2. Les arbres de sortie des deux machines électriques engrènent simultanément sur la première roue dentée commune 11 disposée entre les axes X1 et X2.

Ce système de propulsion 1 comprend un deuxième sous-ensemble EM2 de n2 machines électriques de propulsion apte à fournir un deuxième couple moteur, n2 étant un nombre entier supérieur ou égal à 2. Dans ce premier exemple représenté sur les figures 1 et 2, le deuxième sous-ensemble EM2 comprend deux machines électriques de propulsion 2c et 2d. Comme on peut le voir sur la figure 2, la troisième machine électrique 2c présente un troisième axe de rotation X3 et la quatrième machine électrique 2d présente un quatrième axe de rotation X4.

Chaque machine électrique 2c, 2d du deuxième sous-ensemble EM2 comprend un stator et un rotor présentant un arbre de sortie mobile en rotation autour d'un axe lié cinématiquement à une deuxième roue dentée commune 11' de sorte à former un deuxième réducteur de vitesse Z1', Z2'. Les arbres de sortie des deux machines électriques engrènent simultanément sur la deuxième roue dentée commune 11' disposée entre les axes X3 et X4.

Les machines électriques tournantes 2a, 2b, 2c, 2d sont du même type et sont par exemple des machines synchrones à aimants permanents. Chaque machine électrique fournit une même puissance nominale mécanique, cette puissance étant par exemple de l'ordre 100kW. En variante, il peut s'agir de machines asynchrones, par exemple.

Dans l'exemple décrit, les axes de rotation des machines électriques tournantes sont parallèles mais non confondus, les quatre machines électriques 2a, 2b, 2c, 2d n'ayant pas leurs axes de rotation alignés.

Un carter de transmission 3 supporte les quatre machines électriques et les roues dentées communes 11 et 11' à l'aide de paliers de guidage 15, 15'. Le palier de guidage peut être un roulement à rouleaux ou un roulement à billes. Le carter de transmission 3 comprend un circuit de circulation de fluide 4 cheminant entre les quatre machines électriques afin d'évacuer les calories émises lors de la transmission d'un couple au sein du système de propulsion. Le fluide peut être de l'huile de refroidissement ou une solution aqueuse.

Le système de propulsion 1 comprend un premier ensemble de trains d'engrenage T1 liant cinématiquement la première roue dentée commune 11 à un arbre secondaire 13 apte à entraîner un ensemble d'une ou plusieurs roues motrices du véhicule. Plus précisément, le premier ensemble de trains d'engrenage T1 comprend :
- des roues dentées primaires Z5, Z7, Z9 aptes à être entraînées par la première roue dentée commune 11,
- un arbre intermédiaire 12 apte à être entraîné par des roues dentées intermédiaires Z6, Z8, Z10, chaque roue dentée primaire Z5, Z7, Z9 étant liée cinématiquement à une roue dentée intermédiaire Z6, Z8, Z10 correspondante de sorte à former un train d'engrenage correspondant à un troisième réducteur de vitesse,
- une roue dentée secondaire Z12 liée cinématiquement à l'arbre intermédiaire 12 de sorte à former un quatrième réducteur de vitesse.

Le premier ensemble de trains d'engrenage T1 comprend également un premier système de couplage sélectif 10, disposé entre la première roue dentée commune 11 et l'arbre secondaire 13, agencé pour sélectionner un premier train d'engrenage Z5, Z6 ou un deuxième train d'engrenage Z7, Z8 depuis une position neutre de découplage. Le premier système de couplage sélectif 10 est disposé entre l'arbre intermédiaire 12 et les roues dentées intermédiaire Z6, Z8. Ce premier système de couplage sélectif 10 à trois positions est réalisé sous la forme d'un crabot. En variante, le premier système de couplage peut comprendre deux sous-ensembles de couplage, le premier étant associé uniquement au premier train d'engrenage Z5, Z6 et le deuxième étant associé uniquement au deuxième train d'engrenage Z7, Z8. En variante, le système de couplage peut être réalisé sous la forme d'un synchroniseur.

De préférence, le premier ensemble de trains d'engrenage peut comprendre un deuxième système de couplage sélectif 20, disposé entre l'arbre intermédiaire 12 et une roue dentée intermédiaire Z10 additionnelle, agencé pour sélectionner un troisième train d'engrenage Z9, Z10 depuis une position neutre de découplage. Ce deuxième système de couplage sélectif 20 à deux positions est réalisé sous la forme d'un crabot. En variante, le système de couplage peut être réalisé sous la forme d'un synchroniseur.

Le système de propulsion 1 comprend un deuxième ensemble de trains d'engrenage T2 liant cinématiquement la deuxième roue dentée commune 11' à l'arbre secondaire 13. Plus précisément, le deuxième ensemble de trains d'engrenage T2 comprend une roue dentée primaire Z3 entraînée constamment par la deuxième roue dentée commune 11', ladite roue dentée primaire Z3 étant liée cinématiquement à l'arbre intermédiaire 12 de sorte à former un train d'engrenage Z3, Z4 correspondant à un cinquième réducteur de vitesse.

Dans ce premier exemple de mise en oeuvre de l'invention, l'arbre secondaire 13 est entraîné en rotation par la roue dentée secondaire Z12 par un troisième système de couplage sélectif 30 réalisé sous la forme d'un crabot.

Comme illustré sur la figure 1, un arbre de transmission 6 équipé de cardans, relie l'arbre secondaire 13 à un différentiel 7. Ce différentiel 7 peut être un différentiel mécanique ou un différentiel électronique pilotant le couple de sortie sur chaque roue motrice du véhicule.

Ce premier exemple de mise en oeuvre de l'invention présente l'avantage d'avoir trois rapports de réduction distincts sans perte de couple ou de puissance lors des phases de changement de rapport de vitesse.

On va maintenant décrire la phase transitoire de changement à un rapport de réduction de vitesse supérieur pour le système de propulsion 1, notamment le passage du premier rapport vers le deuxième rapport.

Lors de la phase de roulage du véhicule électrique V comprise entre un instant t0 et t1, on considère que le premier rapport de réduction de vitesse est engagé et que le premier système de couplage sélectif 10 est dans une première position de couplage dans laquelle le premier train d'engrenage Z5, Z6 est sélectionné. Le deuxième système de couplage sélectif 20 est dans une position neutre de découplage.

Entre un instant t1 et t2, le premier système de couplage sélectif 10 est désengagé du premier train d'engrenage Z5, Z6 de sorte que les machines électriques du premier sous-ensemble EM1 ne fournissent plus de couple. Le premier système de couplage sélectif 10 est désormais dans une position neutre de découplage. Les machines électriques 2c, 2d du deuxième sous-ensemble EM2 fournissent alors un couple supplémentaire permettant de compenser totalement la perte de couple issue du découplage du premier sous-ensemble EM1 de machines électriques inhérente au changement de rapport de vitesse. Le couple supplémentaire est approximativement égal au premier couple moteur qui est fournie par le premier sous-ensemble EM1 de machines électriques 2a, 2b juste avant la phase de changement de rapport de vitesse.

Pour préparer l'engagement du crabot 10 vers une deuxième position de couplage, on mesure la vitesse de rotation relative entre la première roue dentée commune 11 et l'arbre intermédiaire 12 par utilisation des différents capteurs de vitesse présents dans le système de propulsion 1 et en prenant en compte le rapport de réduction de vitesse du deuxième train d'engrenage Z7, Z8.

Entre un instant t2 et t3, les machines électriques 2a, 2b réversibles du premier sous-ensemble EM1 sont activées pour ralentir la roue dentée commune 11 de manière à synchroniser les vitesses de rotation de la roue dentée commune 11 et de l'arbre intermédiaire 12. Les machines électriques du deuxième sous-ensemble EM2 fournissent toujours un couple supplémentaire.

Entre un instant t3 et t4, le crabot 10 est engagé pour accoupler l'arbre intermédiaire 12 et la roue dentée intermédiaire Z8 lorsque leurs vitesses de rotation sont synchronisées. Le deuxième rapport de réduction de vitesse est engagé lorsque le premier système de couplage sélectif 10 est dans une deuxième position de couplage dans laquelle le deuxième train d'engrenage Z7, Z8 est sélectionné. Dès lors, les machines électriques du premier sous-ensemble EM1 fournissent de nouveau du couple et les machines électriques du deuxième sous-ensemble EM2 ne fournissent plus de couple supplémentaire.

Au-delà de l'instant t4, les deux machines électriques du premier sous-ensemble EM1 et les deux machines électriques du deuxième sous-ensemble EM2 fournissent de nouveau du couple dans leur plage de fonctionnement nominale, c'est-à-dire une plage ou le couple est inférieur ou égal au couple nominal.

On va maintenant décrire la phase transitoire de changement à un rapport de réduction de vitesse supérieur pour le système de propulsion 1, notamment le passage du deuxième rapport vers le troisième rapport.

Lors de la phase de roulage du véhicule électrique V comprise entre un instant t0 et t1, on considère que le deuxième rapport de réduction de vitesse est engagé et que le premier système de couplage sélectif 10 est dans une deuxième position de couplage dans laquelle le deuxième train d'engrenage Z7, Z8 est sélectionné. Le deuxième système de couplage sélectif 20 est dans une position neutre de découplage.

Entre un instant t1 et t2, le premier système de couplage sélectif 10 est désengagé du deuxième train d'engrenage Z7, Z8 de sorte que les machines électriques du premier sous-ensemble EM1 ne fournissent plus de couple. Le premier système de couplage sélectif 10 est désormais dans une position neutre de découplage. Les machines électriques du deuxième sous-ensemble EM2 fournissent alors un couple supplémentaire permettant de compenser totalement la perte de couple issue du découplage du premier sous-ensemble EM1 de machines électriques inhérente au changement de rapport de vitesse. Le couple supplémentaire est approximativement égal au premier couple moteur qui est fournie par le premier sous-ensemble EM1 de machines électriques juste avant la phase de changement de rapport de vitesse.

Pour préparer l'engagement du crabot 20 vers une position de couplage, on mesure la vitesse de rotation relative entre la première roue dentée commune 11 et l'arbre intermédiaire 12 par utilisation des différents capteurs de vitesse présents dans le système de propulsion 1 et en prenant en compte le rapport de réduction de vitesse du troisième train d'engrenage Z9, Z10.

Entre un instant t2 et t3, les machines électriques réversibles du premier sous-ensemble EM1 sont activées pour ralentir la roue dentée commune 11 de manière à synchroniser les vitesses de rotation de la roue dentée commune 11 et de l'arbre intermédiaire 12. Les machines électriques du deuxième sous-ensemble EM2 fournissent toujours un couple supplémentaire.

Entre un instant t3 et t4, le crabot 20 est engagé pour accoupler l'arbre intermédiaire 12 et la roue dentée intermédiaire additionnelle Z10 lorsque leurs vitesses de rotation sont synchronisées. Le troisième rapport de réduction de vitesse est engagé lorsque le deuxième système de couplage sélectif 20 est dans une position de couplage dans laquelle le troisième train d'engrenage Z9, Z10 est sélectionné. Dès lors, les machines électriques du premier sous-ensemble EM1 fournissent de nouveau du couple et les machines électriques du deuxième sous-ensemble EM2 ne fournissent plus de couple supplémentaire.

Au-delà de l'instant t4, les deux machines électriques du premier sous-ensemble EM1 et les deux machines électriques du deuxième sous-ensemble EM2 fournissent de nouveau du couple dans leur plage de fonctionnement nominale, c'est-à-dire une plage ou le couple est inférieur ou égal au couple nominal.

Dans ce premier mode de mise en oeuvre de l'invention, l'arbre secondaire 13 est entraîné par la roue dentée secondaire Z12 par un troisième système de couplage sélectif 30. De cette manière, il est possible de déconnecter le système de propulsion des roues du véhicule. On sécurise ainsi le système de propulsion 1 et notamment les machines électriques. Ce troisième moyen de couplage sélectif 30 est réalisé sous la forme d'un crabot.

On va maintenant décrire la phase transitoire de changement à un rapport de réduction de vitesse inférieur pour le système de propulsion 1, notamment le passage du troisième rapport vers le deuxième rapport.

Lors de la phase de roulage du véhicule électrique V comprise entre un instant t0 et t1, on considère que le troisième rapport de réduction de vitesse est engagé et que le deuxième système de couplage sélectif 20 est dans une position de couplage dans laquelle le troisième train d'engrenage Z9, Z10 est sélectionné. Le premier système de couplage sélectif 10 est dans une position neutre de découplage.

Entre un instant t1 et t2, le deuxième système de couplage sélectif 20 est désengagé du troisième train d'engrenage Z9, Z10 de sorte que les machines électriques du premier sous-ensemble EM1 ne fournissent plus de couple. Le deuxième système de couplage sélectif 20 est désormais dans une position neutre de découplage. Les machines électriques du deuxième sous-ensemble EM2 fournissent alors un couple supplémentaire permettant de compenser totalement la perte de couple issue du découplage du premier sous-ensemble EM1 de machines électriques inhérente au changement de rapport de vitesse. Le couple supplémentaire est approximativement égal au premier couple moteur qui est fournie par le premier sous-ensemble EM1 de machines électriques juste avant la phase de changement de rapport de vitesse.

Pour préparer l'engagement du crabot 10 vers une position de couplage, on mesure la vitesse de rotation relative entre la première roue dentée commune 11 et l'arbre intermédiaire 12 par utilisation des différents capteurs de vitesse présents dans le système de propulsion 1 et en prenant en compte le rapport de réduction de vitesse du deuxième train d'engrenage Z7, Z8.

Entre un instant t2 et t3, les machines électriques réversibles du premier sous-ensemble EM1 sont activées pour accélérer la roue dentée commune 11 de manière à synchroniser les vitesses de rotation de la roue dentée commune 11 et de l'arbre intermédiaire 12. Les machines électriques du deuxième sous-ensemble EM2 fournissent toujours un couple supplémentaire.

Entre un instant t3 et t4, le crabot 10 est engagé pour accoupler l'arbre intermédiaire 12 et la roue dentée intermédiaire Z8 lorsque leurs vitesses de rotation sont synchronisées. Le deuxième rapport de réduction de vitesse est engagé lorsque le premier système de couplage sélectif 10 est dans une deuxième position de couplage dans laquelle le deuxième train d'engrenage Z7, Z8 est sélectionné. Dès lors, les machines électriques du premier sous-ensemble EM1 fournissent de nouveau du couple et les machines électriques du deuxième sous-ensemble EM2 ne fournissent plus de couple supplémentaire.

Au-delà de l'instant t4, les deux machines électriques du premier sous-ensemble EM1 et les deux machines électriques du deuxième sous-ensemble EM2 fournissent de nouveau du couple dans leur plage de fonctionnement nominale, c'est-à-dire une plage ou le couple est inférieur ou égal au couple nominal.

On va maintenant décrire la phase transitoire de changement à un rapport de réduction de vitesse inférieur pour le système de propulsion 1, notamment le passage du deuxième rapport vers le premier rapport.

Lors de la phase de roulage du véhicule électrique V comprise entre un instant t0 et t1, on considère que le deuxième rapport de réduction de vitesse est engagé et que le premier système de couplage sélectif 10 est dans une position de couplage dans laquelle le deuxième train d'engrenage Z7, Z8 est sélectionné. Le deuxième système de couplage sélectif 20 est dans une position neutre de découplage.

Entre un instant t1 et t2, le premier système de couplage sélectif 10 est désengagé du deuxième train d'engrenage Z9, Z10 de sorte que les machines électriques du premier sous-ensemble EM1 ne fournissent plus de couple. Le premier système de couplage sélectif 10 est désormais dans une position neutre de découplage. Les machines électriques du deuxième sous-ensemble EM2 fournissent alors un couple supplémentaire permettant de compenser totalement la perte de couple issue du découplage du premier sous-ensemble EM1 de machines électriques inhérente au changement de rapport de vitesse. Le couple supplémentaire est approximativement égal au premier couple moteur qui est fournie par le premier sous-ensemble EM1 de machines électriques juste avant la phase de changement de rapport de vitesse.

Pour préparer l'engagement du crabot 10 vers une position de couplage, on mesure la vitesse de rotation relative entre la première roue dentée commune 11 et l'arbre intermédiaire 12 par utilisation des différents capteurs de vitesse présents dans le système de propulsion 1 et en prenant en compte le rapport de réduction de vitesse du premier train d'engrenage Z5, Z6.

Entre un instant t2 et t3, les machines électriques réversibles du premier sous-ensemble EM1 sont activées pour accélérer la roue dentée commune 11 de manière à synchroniser les vitesses de rotation de la roue dentée commune 11 et de l'arbre intermédiaire 12. Les machines électriques du deuxième sous-ensemble EM2 fournissent toujours un couple supplémentaire.

Entre un instant t3 et t4, le crabot 10 est engagé pour accoupler l'arbre intermédiaire 12 et la roue dentée intermédiaire Z6 lorsque leurs vitesses de rotation sont synchronisées. Le premier rapport de réduction de vitesse est engagé lorsque le premier système de couplage sélectif 10 est dans une première position de couplage dans laquelle le premier train d'engrenage Z5, Z6 est sélectionné. Dès lors, les machines électriques du premier sous-ensemble EM1 fournissent de nouveau du couple et les machines électriques du deuxième sous-ensemble EM2 ne fournissent plus de couple supplémentaire.

Au-delà de l'instant t4, les deux machines électriques du premier sous-ensemble EM1 et les deux machines électriques du deuxième sous-ensemble EM2 fournissent de nouveau du couple dans leur plage de fonctionnement nominale, c'est-à-dire une plage ou le couple est inférieur ou égal au couple nominal.

Dans ce premier mode de mise en oeuvre de l'invention, les machines électriques du deuxième sous-ensemble EM2 fournissent constamment un couple dont la valeur en Nm varie entre une valeur nominale et une valeur maximale. Le couple maximal n'est utilisé que sur une très courte durée, de l'ordre de quelques secondes, afin d'éviter une surchauffe excessive et d'endommager les composants de la machine électrique.

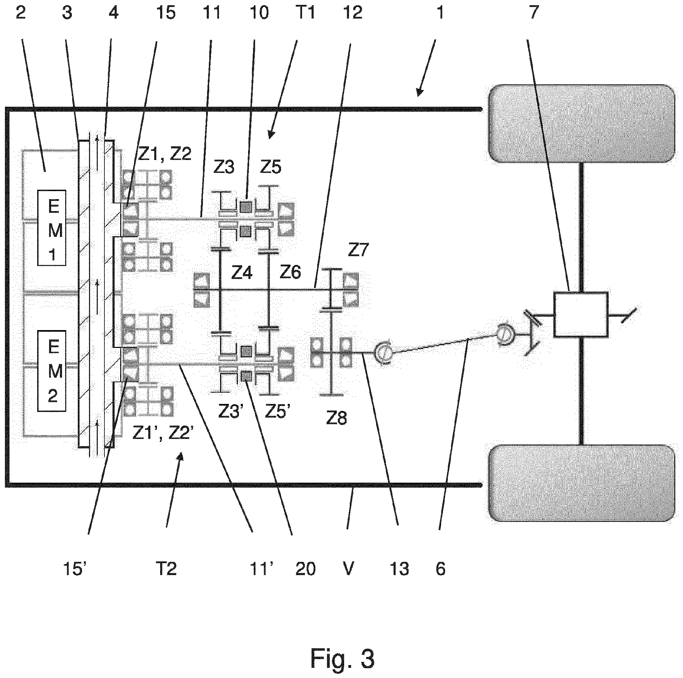

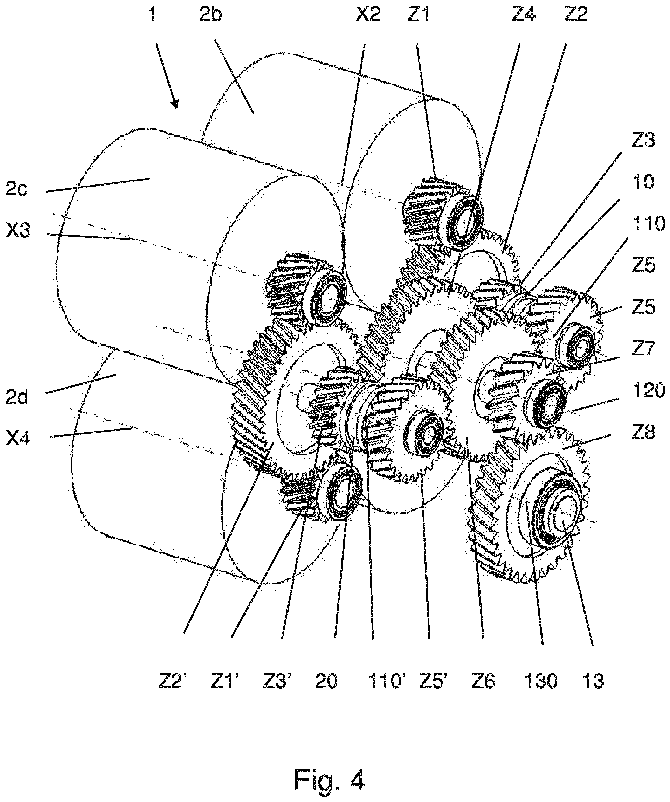

Sur les figures 3 et 4 est illustré un deuxième mode de mise en oeuvre de l'invention, qui diffère du précédent par une architecture sensiblement symétrique dans laquelle un premier système de couplage sélectif 10 est disposé entre la première roue dentée commune 11 et l'arbre secondaire 13 et un deuxième système de couplage sélectif 20 est disposé entre la deuxième roue dentée commune 11' et l'arbre secondaire 13. Cette architecture présente l'avantage de standardiser la conception du système de propulsion 1.

Comme illustré sur les figures 3 et 4, le système de propulsion 1 comprend un premier sous-ensemble EM1 de deux machines électriques 2a, 2b de propulsion apte à fournir un premier couple moteur. La première machine électrique 2a présente un premier axe de rotation X1 et la deuxième machine électrique 2b présente un deuxième axe de rotation X2.

Chaque machine électrique 2a, 2b du premier sous-ensemble EM1 comprend un stator et un rotor présentant un arbre de sortie mobile en rotation autour d'un axe lié cinématiquement à une première roue dentée commune 11 de sorte à former un premier réducteur de vitesse Z1, Z2. Les arbres de sortie des deux machines électriques engrènent simultanément sur la première roue dentée commune 11 disposée entre les axes X1 et X2.

Ce système de propulsion 1 comprend un deuxième sous-ensemble EM2 de deux machines électriques de propulsion apte à fournir un deuxième couple moteur. La troisième machine électrique 2c présente un troisième axe de rotation X3 et la quatrième machine électrique 2d présente un quatrième axe de rotation X4.

Chaque machine électrique 2c, 2d du deuxième sous-ensemble EM2 comprend un stator et un rotor présentant un arbre de sortie mobile en rotation autour d'un axe lié cinématiquement à une deuxième roue dentée commune 11' de sorte à former un deuxième réducteur de vitesse Z1', Z2'. Les arbres de sortie des deux machines électriques engrènent simultanément sur la deuxième roue dentée commune 11' disposée entre les axes X3 et X4.

Un carter de transmission 3 supporte les quatre machines électriques et les roues dentées communes 11 et 11' à l'aide de paliers de guidage 15, 15'. Le carter de transmission 3 comprend un circuit de circulation de fluide 4 cheminant entre les quatre machines électriques afin d'évacuer les calories émises lors de la transmission d'un couple au sein du système de propulsion. Le fluide peut être de l'huile de refroidissement ou une solution aqueuse.

Le système de propulsion 1 comprend un premier ensemble de trains d'engrenage T1 liant cinématiquement la première roue dentée commune 11 à l'arbre secondaire 13. Plus précisément, le premier ensemble de trains d'engrenage T1 comprend :
- des roues dentées primaires Z3, Z5 aptes à être entraînées par la première roue dentée commune 11,
- un arbre intermédiaire 12 apte à être entraîné par des roues dentées intermédiaires Z4, Z6 chaque roue dentée primaire Z3, Z5 étant liée cinématiquement à une roue dentée intermédiaire Z4, Z6 correspondante de sorte à former un train d'engrenage correspondant à un troisième réducteur de vitesse,
- une roue dentée secondaire Z8 liée cinématiquement à l'arbre intermédiaire 12 de sorte à former un quatrième réducteur de vitesse.

Le premier ensemble de trains d'engrenage T1 comprend également un premier système de couplage sélectif 10, disposé entre la première roue dentée commune 11 et l'arbre secondaire 13, agencé pour sélectionner un premier train d'engrenage Z3, Z4 ou un deuxième train d'engrenage Z5, Z6 depuis une position neutre de découplage. Le premier système de couplage sélectif 10 est disposé entre la première roue dentée commune 11 et les roues dentées primaires Z3, Z5. Ce premier système de couplage sélectif 10 à trois positions est réalisé sous la forme d'un crabot. En variante, le système de couplage peut être réalisé sous la forme d'un synchroniseur.

Dans ce deuxième exemple de mise en oeuvre de l'invention, le deuxième ensemble de trains d'engrenage T2 comprend un deuxième système de couplage sélectif 20, disposé entre la deuxième roue dentée commune 11' et l'arbre secondaire 13, agencé pour sélectionner un troisième train d'engrenage Z3', Z4 ou un quatrième train d'engrenage Z5', Z6 depuis une position neutre lors d'une phase de changement de rapport de vitesse.

En raison de l'architecture sensiblement symétrique du système de propulsion 1, le rapport de réduction du premier train d'engrenage Z3, Z4 est identique à celui du troisième train d'engrenage Z3', Z4 et le rapport de réduction du deuxième train d'engrenage Z5, Z6 est identique à celui du quatrième train d'engrenage Z5', Z6.

Le deuxième ensemble de trains d'engrenage T2 comprend :
- deux roues dentées primaires Z3', Z5' aptes à être entraînées par la deuxième roue dentée commune 11',
- l'arbre intermédiaire 12 commun avec le premier ensemble de trains d'engrenage T1, chaque roue dentée primaire Z3', Z5' du deuxième ensemble de trains d'engrenage T2 étant liée cinématiquement à une roue dentée intermédiaire Z4, Z6 correspondante de sorte à former un train d'engrenage auquel est associé un cinquième réducteur de vitesse.

Le deuxième système de couplage sélectif 20 est disposé entre la deuxième roue dentée commune 11' et les roues dentées primaires Z3', Z5'. Ce deuxième système de couplage sélectif 20 à trois positions est réalisé sous la forme d'un crabot. En variante, le système de couplage peut être réalisé sous la forme d'un synchroniseur.

De manière optionnelle, l'arbre secondaire 13 peut être entraîné en rotation par la roue dentée secondaire Z8 par un troisième système de couplage sélectif 30 réalisé sous la forme d'un crabot ou d'un synchroniseur.

Ce deuxième exemple de mise en oeuvre de l'invention présente l'avantage d'avoir deux rapports de réduction distincts sans perte de couple ou de puissance lors des phases de changement de rapport de vitesse.

On va maintenant décrire la phase transitoire de changement à un rapport de réduction de vitesse supérieur pour le système de propulsion 1, notamment le passage du premier rapport vers le deuxième rapport.

Lors de la phase de roulage du véhicule électrique V comprise entre un instant t0 et t1, on considère que le premier rapport de réduction de vitesse est engagé. Dans ce cas, le premier système de couplage sélectif 10 est dans une première position de couplage dans laquelle le premier train d'engrenage Z3, Z4 est sélectionné et le deuxième système de couplage sélectif 20 est dans une première position de couplage dans laquelle le premier train d'engrenage Z3', Z4 est sélectionné.

Entre un instant t1 et t2, le premier système de couplage sélectif 10 est désengagé du premier train d'engrenage Z3, Z4 de sorte que les machines électriques du premier sous-ensemble EM1 ne fournissent plus de couple. Le premier système de couplage sélectif 10 est désormais dans une position neutre de découplage. Les machines électriques du deuxième sous-ensemble EM2 fournissent alors un couple supplémentaire, de manière à compenser totalement la perte de couple issue du découplage du premier sous-ensemble EM1 de machines électriques inhérente au changement de rapport de vitesse. Le couple supplémentaire est approximativement égal au premier couple moteur qui est fournie par le premier sous-ensemble EM1 de machines électriques juste avant la phase de changement de rapport de vitesse.

Pour préparer l'engagement du crabot 10 vers une deuxième position de couplage, on mesure la vitesse de rotation relative entre la première roue dentée commune 11 et la roue dentée primaire Z5 par utilisation des différents capteurs de vitesse présents dans le système de propulsion 1.

Entre un instant t2 et t3, les machines électriques réversibles du premier sous-ensemble EM1 sont activées pour ralentir la première roue dentée commune 11 de manière à synchroniser les vitesses de rotation de la première roue dentée commune 11 et la roue dentée primaire Z5. Les machines électriques du deuxième sous-ensemble EM2 fournissent toujours un couple supplémentaire.

Entre un instant t3 et t4, le crabot 10 est engagé pour accoupler la première roue dentée commune 11 et la roue dentée primaire Z5 lorsque leurs vitesses de rotation sont synchronisées.

Entre un instant t4 et t5, le deuxième système de couplage sélectif 20 est désengagé du troisième train d'engrenage Z3', Z4 de sorte que les machines électriques du deuxième sous-ensemble EM2 ne fournissent plus de couple. Le deuxième système de couplage sélectif 20 est désormais dans une position neutre de découplage. Les machines électriques du premier sous-ensemble EM1 fournissent alors un couple supplémentaire, de manière à compenser totalement la perte de couple issue du découplage du deuxième sous-ensemble EM2 de machines électriques inhérente au changement de rapport de vitesse. Le couple supplémentaire est approximativement égal au deuxième couple moteur qui est fournie par le deuxième sous-ensemble EM2 de machines électriques juste avant la phase de changement de rapport de vitesse.

Pour préparer l'engagement du crabot 20 vers une deuxième position de couplage, on mesure la vitesse de rotation relative entre la deuxième roue dentée commune 11' et la roue dentée primaire Z5' par utilisation des différents capteurs de vitesse présents dans le système de propulsion 1.

Entre un instant t5 et t6, les machines électriques réversibles du deuxième sous-ensemble EM2 sont activées pour ralentir la deuxième roue dentée commune 11' de manière à synchroniser les vitesses de rotation de la deuxième roue dentée commune 11' et la roue dentée primaire Z5'. Les machines électriques du premier sous-ensemble EM1 fournissent toujours un couple supplémentaire.

Entre un instant t6 et t7, le crabot 20 est engagé pour accoupler la deuxième roue dentée commune 11' et la roue dentée primaire Z5' lorsque leurs vitesses de rotation sont synchronisées. Le deuxième rapport de réduction de vitesse est engagé lorsque le deuxième système de couplage sélectif 20 est dans sa deuxième position de couplage. Dès lors, les machines électriques du deuxième sous-ensemble EM2 fournissent de nouveau du couple et les machines électriques du premier sous-ensemble EM1 ne fournissent plus de couple supplémentaire.

Au-delà de l'instant t7, les deux machines électriques du premier sous-ensemble EM1 et les deux machines électriques du deuxième sous-ensemble EM2 fournissent de nouveau du couple dans leur plage de fonctionnement nominale, c'est-à-dire une plage ou le couple est inférieur ou égal au couple nominal.

On va maintenant décrire la phase transitoire de changement à un rapport de réduction de vitesse inférieur pour le système de propulsion 1, notamment le passage du deuxième rapport vers le premier rapport.

Lors de la phase de roulage du véhicule électrique V comprise entre un instant t0 et t1, on considère que le deuxième rapport de réduction de vitesse est engagé. Dans ce cas, le premier système de couplage sélectif 10 est dans une deuxième position de couplage dans laquelle le deuxième train d'engrenage Z5, Z6 est sélectionné et le deuxième système de couplage sélectif 20 est dans une deuxième position de couplage dans laquelle le deuxième train d'engrenage Z5', Z6 est sélectionné.

Entre un instant t1 et t2, le premier système de couplage sélectif 10 est désengagé du deuxième train d'engrenage Z5, Z6 de sorte que les machines électriques du premier sous-ensemble EM1 ne fournissent plus de couple. Le premier système de couplage sélectif 10 est désormais dans une position neutre de découplage. Les machines électriques du deuxième sous-ensemble EM2 fournissent alors un couple supplémentaire, de manière à compenser totalement la perte de couple issue du découplage du premier sous-ensemble EM1 de machines électriques inhérente au changement de rapport de vitesse.

Pour préparer l'engagement du crabot 10 vers une première position de couplage, on mesure la vitesse de rotation relative entre la première roue dentée commune 11 et la roue dentée primaire Z3 par utilisation des différents capteurs de vitesse présents dans le système de propulsion 1.

Entre un instant t2 et t3, les machines électriques réversibles du premier sous-ensemble EM1 sont activées pour accélérer la première roue dentée commune 11 de manière à synchroniser les vitesses de rotation de la première roue dentée commune 11 et la roue dentée primaire Z3. Les machines électriques du deuxième sous-ensemble EM2 fournissent toujours un couple supplémentaire.

Entre un instant t3 et t4, le crabot 10 est engagé pour accoupler la première roue dentée commune 11 et la roue dentée primaire Z3 lorsque leurs vitesses de rotation sont synchronisées.

Entre un instant t4 et t5, le deuxième système de couplage sélectif 20 est désengagé du quatrième train d'engrenage Z5', Z6 de sorte que les machines électriques du deuxième sous-ensemble EM2 ne fournissent plus de couple. Le deuxième système de couplage sélectif 20 est désormais dans une position neutre de découplage. Les machines électriques du premier sous-ensemble EM1 fournissent alors un couple supplémentaire, de manière à compenser totalement la perte de couple issue du découplage du deuxième sous-ensemble EM2 de machines électriques inhérente au changement de rapport de vitesse.

Pour préparer l'engagement du crabot 20 vers une première position de couplage, on mesure la vitesse de rotation relative entre la deuxième roue dentée commune 11' et la roue dentée primaire Z3' par utilisation des différents capteurs de vitesse présents dans le système de propulsion 1.

Entre un instant t5 et t6, les machines électriques réversibles du deuxième sous-ensemble EM2 sont activées pour accélérer la deuxième roue dentée commune 11' de manière à synchroniser les vitesses de rotation de la deuxième roue dentée commune 11' et la roue dentée primaire Z3'. Les machines électriques du premier sous-ensemble EM1 fournissent toujours un couple supplémentaire.

Entre un instant t6 et t7, le crabot 20 est engagé pour accoupler la deuxième roue dentée commune 11' et la roue dentée primaire Z3' lorsque leurs vitesses de rotation sont synchronisées. Le premier rapport de réduction de vitesse est engagé lorsque le deuxième système de couplage sélectif 20 est dans sa première position de couplage. Dès lors, les machines électriques du deuxième sous-ensemble EM2 fournissent de nouveau du couple et les machines électriques du premier sous-ensemble EM1 ne fournissent plus de couple supplémentaire.

Au-delà de l'instant t7, les deux machines électriques du premier sous-ensemble EM1 et les deux machines électriques du deuxième sous-ensemble EM2 fournissent de nouveau du couple dans leur plage de fonctionnement nominale, c'est-à-dire une plage ou le couple est inférieur ou égal au couple nominal.

De cette manière, il est possible de faire démarrer le véhicule électrique en alimentant électriquement les deux sous-ensembles de machines électriques en continu. Lors d'une phase transitoire de changement de rapport de vitesse, le véhicule électrique conserve sa vitesse car l'un des sous-ensembles de machines électriques peut être commandé de manière à fournir un couple ou une puissance supplémentaire lors de cette phase tandis que l'autre sous-ensemble de machines électriques ne transmet plus de couple ou de puissance afin d'effectuer ce changement de rapport.

L'invention n'est pas limitée aux exemples qui viennent d'être décrits.

## Revendications

1. Système de propulsion (1) pour véhicule électrique, comprenant :
- un premier sous-ensemble (EM1) de n1 machines électriques de propulsion (2) apte à fournir un premier couple moteur (C0), n1 étant un nombre entier supérieur ou égal à 2, chaque machine électrique comprenant un stator et un rotor présentant un arbre de sortie mobile en rotation autour d'un axe lié cinématiquement à une première roue dentée commune (11) de sorte à former un premier réducteur de vitesse (Z1, Z2),
- un deuxième sous-ensemble (EM2) de n2 machines électriques de propulsion (2) apte à fournir un deuxième couple moteur (C0'), n2 étant un nombre entier supérieur ou égal à 2, chaque machine électrique comprenant un stator et un rotor présentant un arbre de sortie mobile en rotation autour d'un axe lié cinématiquement à une deuxième roue dentée commune (11') de sorte à former un deuxième réducteur de vitesse (Z1', Z2'),
- un premier ensemble de trains d'engrenage (T1) liant cinématiquement la première roue dentée commune (11) à un arbre secondaire (13) apte à entraîner un ensemble d'une ou plusieurs roues motrices du véhicule, dans lequel un premier système de couplage sélectif (10), disposé entre la première roue dentée commune et l'arbre secondaire, est agencé pour sélectionner un premier train d'engrenage (Z5, Z6) ou un deuxième train d'engrenage (Z7, Z8) depuis une position neutre lors d'une phase de changement de rapport de vitesse,
- un deuxième ensemble de trains d'engrenage (T2) liant cinématiquement la deuxième roue dentée commune (11') à l'arbre secondaire (13),
**caractérisé en ce que** le deuxième sous-ensemble (EM2) de n2 machines électriques est commandé de manière à fournir un couple supplémentaire permettant de compenser totalement la perte de couple issue du découplage du premier sous-ensemble (EM1) de n1 machines électriques inhérente au changement de rapport de vitesse.

2. Système de propulsion (1) selon la revendication 1, **caractérisé en ce que** ledit couple supplémentaire est approximativement égal au premier couple moteur (C0) qui est fournie par le premier sous-ensemble (EM1) de n1 machines électriques juste avant la phase de changement de rapport de vitesse.

3. Système de propulsion selon la revendication 1 ou 2, comprenant un carter de transmission (3) supportant le premier sous-ensemble (EM1) de n1 machines électriques et la première roue dentée commune (11) à l'aide d'au moins un premier palier de guidage (15) et supportant également le deuxième sous-ensemble (EM2) de n2 machines électriques et la deuxième roue dentée commune (11') à l'aide d'au moins un deuxième palier de guidage (15').

4. Système de propulsion (1) selon l'une des revendications 1 à 3, dans lequel le carter de transmission (3) comprend un circuit de circulation de fluide (4) cheminant entre les n1 machines électriques (2) du premier sous-ensemble (EM1) et les n2 machines électriques du deuxième sous-ensemble (EM2) afin d'évacuer les calories émises lors de la transmission du couple supplémentaire.

5. Système de propulsion selon l'une des revendications 1 à 4, dans lequel l'axe de rotation (110) de la première roue dentée commune (11), l'axe de rotation (110') de la deuxième roue dentée commune (11') et l'axe (130) de l'arbre secondaire (13) sont parallèles.

6. Système de propulsion (1) selon l'une des revendications 1 à 5, les n1 machines électriques (2) du premier sous-ensemble (EM1) et les n2 machines électriques du deuxième sous-ensemble (EM2) sont similaires.

7. Système de propulsion (1) selon l'une quelconque des revendications 1 à 6, dans lequel le premier ensemble de trains d'engrenage (T1) comprend :
- des roues dentées primaires (Z5, Z7) aptes à être entraînées par la première roue dentée commune (11),
- un arbre intermédiaire (12) apte à être entraîné par des roues dentées intermédiaires (Z6, Z8), chaque roue dentée primaire (Z5, Z7) étant liée cinématiquement à une roue dentée intermédiaire (Z6, Z8) correspondante de sorte à former un train d'engrenage correspondant à un troisième réducteur de vitesse,
- une roue dentée secondaire (Z12) liée cinématiquement à l'arbre intermédiaire (12) de sorte à former un quatrième réducteur de vitesse,
dans lequel le premier système de couplage sélectif (10) disposé entre l'arbre intermédiaire (12) et les roues dentées intermédiaire (Z6, Z8) est réalisé sous la forme d'un crabot ou d'un synchroniseur.

8. Système de propulsion (1) selon la revendication 7, dans lequel le premier ensemble de trains d'engrenage (T1) comprend un deuxième système de couplage sélectif (20), disposé entre l'arbre intermédiaire (12) et une roue dentée intermédiaire additionnelle (Z10), agencé pour sélectionner un troisième train d'engrenage depuis une position neutre lors d'une phase de changement de rapport de vitesse.

9. Système de propulsion (1) selon la revendication précédente, le deuxième système de couplage sélectif (20) est réalisé sous la forme d'un crabot ou d'un synchroniseur.

10. Système de propulsion (1) selon l'une des revendication 7 à 9, le deuxième ensemble de trains d'engrenage (T2) comprend une roue dentée primaire (Z3) entraînée constamment par la deuxième roue dentée commune (11'), ladite roue dentée primaire (Z3) étant liée cinématiquement à l'arbre intermédiaire (12) de sorte à former un train d'engrenage (Z3, Z4) correspondant à un cinquième réducteur de vitesse.

11. Système de propulsion (1) selon l'une des revendications précédentes, dans lequel l'arbre secondaire (13) est entraîné en rotation par la roue dentée secondaire (Z12) par un troisième système de couplage sélectif (30) réalisé sous la forme d'un crabot ou d'un synchroniseur.

12. Système de propulsion (1) selon l'une des revendications 1 à 7, dans lequel le deuxième ensemble de trains d'engrenage (T2) comprend un deuxième système de couplage sélectif (20), disposé entre la deuxième roue dentée commune (11') et l'arbre secondaire (13), agencé pour sélectionner un troisième train d'engrenage ou un quatrième train d'engrenage depuis une position neutre lors d'une phase de changement de rapport de vitesse, ledit premier sous-ensemble (EM1) de n1 machines électriques étant commandé de manière à fournir un couple supplémentaire, de manière à compenser totalement la perte de couple issue du découplage du deuxième sous-ensemble (EM2) de n2 machines électriques inhérente au changement de rapport de vitesse.

13. Système de propulsion (1) selon la revendication précédente, dans lequel le rapport de réduction du premier train d'engrenage est identique à celui du troisième train d'engrenage et le rapport de réduction du deuxième train d'engrenage est identique à celui du quatrième train d'engrenage.

14. Système de propulsion (1) selon la revendication 12 ou 13, dans lequel le premier ensemble de trains d'engrenage (T1) comprend :
- deux roues dentées primaires (Z3, Z5) aptes à être entraînées par la première roue dentée commune (11),
- un arbre intermédiaire (12) apte à être entraîné par des roues dentées intermédiaires (Z4, Z6), chaque roue dentée primaire (Z3, Z5) étant liée cinématiquement à une roue dentée intermédiaire (Z4, Z6) correspondante de sorte à former un train d'engrenage auquel est associé un troisième réducteur de vitesse,
- une roue dentée secondaire (Z8) liée cinématiquement à l'arbre intermédiaire (12) de sorte à former un quatrième réducteur de vitesse,
dans lequel le premier système de couplage sélectif (10) disposé entre la première roue dentée commune et les roues dentées primaires est réalisé sous la forme d'un crabot ou d'un synchroniseur.

15. Système de propulsion (1) selon la revendication précédente, dans lequel le deuxième ensemble de trains d'engrenage (T2) comprend :
- deux roues dentées primaires (Z3', Z5') aptes à être entraînées par la deuxième roue dentée commune (11'),
- l'arbre intermédiaire (12) commun avec le premier ensemble de trains d'engrenage (T1), chaque roue dentée primaire (Z3', Z5') du deuxième ensemble de trains d'engrenage (T2) étant liée cinématiquement à une roue dentée intermédiaire (Z4, Z6) correspondante de sorte à former un train d'engrenage auquel est associé un cinquième réducteur de vitesse,
dans lequel le deuxième système de couplage sélectif (20) disposé entre la deuxième roue dentée commune (11') et les roues dentées primaires (Z3', Z5') est réalisé sous la forme d'un crabot ou d'un synchroniseur.
